(19) **Europäisches Patentamt / European Patent Office / Office européen des brevets**

(11) **EP 2 224 116 B1**

(12) **EUROPEAN PATENT SPECIFICATION**

(45) Date of publication and mention
of the grant of the patent:
**23.11.2011 Bulletin 2011/47**

(51) Int Cl.:
*F02D 41/02* (2006.01)      *F02D 41/14* (2006.01)
*F01N 3/08* (2006.01)

(21) Application number: **10163087.9**

(22) Date of filing: **22.12.2006**

(54) **An internal combustion engine system and a method for determining a condition of an exhaust gas treatment device in a such a system**

Verbrennungsmotorsystem und Verfahren zur Bestimmung des Zustandes einer Abgasbehandlungsvorrichtung in einem solchen System

Système de moteur à combustion interne et procédé de détermination de l'état d'un dispositif de traitement des gaz d'échappement dans un tel système

(84) Designated Contracting States:
**DE GB SE**

(43) Date of publication of application:
**01.09.2010 Bulletin 2010/35**

(62) Document number(s) of the earlier application(s) in accordance with Art. 76 EPC:
**06127159.9 / 1 936 164**

(73) Proprietor: **Ford Global Technologies, LLC
Dearborn, MI 48126 (US)**

(72) Inventors:
• **Vollmer, Niklas
430 31 Åsa (SE)**
• **Hermansson, Jonas
437 32 Lindome (SE)**

(74) Representative: **Löfgren, Håkan Bengt Alpo
Groth & Co KB
Box 6107
102 32 Stockholm (SE)**

(56) References cited:
**EP-A- 1 324 037      EP-A2- 1 174 611
DE-A1- 19 844 178      JP-A- 10 299 460**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method according to the non-characterizing portion of claim 1, and to an engine system according to the non-characterizing portion of claim 16.

BACKGROUND

Modern vehicles are equipped with exhaust gas treatment devices, known as catalytic converters, that convert toxic gases such as hydrocarbons (HC), carbon monoxide (CO) and nitrogen oxides (NOx) into substances such as carbon dioxide ($CO_2$), nitrogen ($N_2$) and water ($H_2O$). A known problem with catalytic converters is that certain substances can remain, for example by physical or chemical absorption, on internal surfaces of the converters, and reduce the capacity of the converters. Such detrimental adsorption is known as catalytic converter poisoning. For example, fuels, whether gasoline or diesel, for vehicle internal combustion engines, contain a relatively high amount of sulfur, typically depending on in which state or region they are provided. The sulfur creates problems for the operation of the catalyst exhaust gas treatment devices, In the engine combustion process, the sulfur is converted to sulfur oxides (SOx), which adsorbs strongly to internal surfaces of the catalyst and therefore reduces its exhaust gas treatment capacity. This process is often referred to as sulfur poisoning. Sulfur adsorption is particularly strong during low load driving conditions.

A number of catalyst regeneration measures to solve the poisoning problem have been suggested. It is well known that the catalyst can be restored from sulfur poisoning by being exposed to high temperatures. US6901749 discloses, in order to heat the catalyst, providing a rich mixture to the engine cylinders combined with adjusting the ignition timing so as to provide a relatively late ignition during the engine cycles. US6161377 suggests heating the catalyst by introducing secondary air into the exhaust gases, combined with providing a rich mixture to the cylinders. US5657625 also suggest providing a rich mixture on some of the cylinders and a lean mixture in the others.

However, it is important to continuously or periodically accurately establish whether sulfur poisoning is at hand. On one hand, erroneous establishment that sulfur poisoning is not taking place may lead to regeneration measures not being taken, although needed, which can lead to increased emission levels due to a reduction of the capacity of the catalyst. It should be noted that regarding emissions, there are very strict standards to be followed by vehicle manufacturers, such as PZEV (Partial Zero Emission Vehicle). On the other hand, many of the regeneration measures create an environment which contributes to the ageing of the catalyst. Therefore, erroneous establishment, that sulfur poisoning is taking place, resulting in unnecessary regeneration measures being taken, may lead to a quicker ageing process of the catalyst, specially when the regeneration measures result in high catalyst temperatures.

According to US6901749, a sulfur poisoning establishment procedure includes adjusting in an electronic control unit a sulfur oxide (SOx) adsorption counter, based on air-fuel ratio and engine operating condition, as well as on assumptions that a lean mixture increases sulfur adsorption, and a stoichiometric or rich mixture increases or decreases the adsorption depending on engine operating condition. The catalyst temperature, the engine rotational speed and the intake pressure are also used for adsorption estimation. For optimum timing of the removal process, the SOx counter is adjusted with both SOx adsorption and desorption. A problem with this known solution is that it depends highly on programmed parameter values, for example the fuel sulfur content, which may vary from one region to another. Therefore, if the actual fuel sulfur content differs from the programmed fuel sulfur content, the known method will result in erroneous estimations of the catalyst sulfur poisoning level. This could result in un-needed regeneration measures which quicken the ageing process of the catalyst, or increased emissions due to unattended sulfur poisoning conditions.

It is known to use sensors located downstream of a catalyst to establish sulfur levels in the catalyst. EP1324037A1 discloses a method in which a lambda probe, located downstream of the catalyst, detects a change from lean to rich, in order to establish that a sulfur regeneration process is completed. DE10023793A1 describes the use of a SO2-sensor to control sulfur regeneration of a catalyst. EP0971101A2 describes calculating the amount of SOx held by a NOx catalyst based on a change in the output of a linear air-fuel ratio sensor located downstream of the catalyst. EP 1174611 describes a method to determine the degree of poisoning based on two delays from the respective change of air fuel ratio.

SUMMARY OF THE INVENTION

It is an object of the present invention to provide an improved method of establishing the need for regeneration of an exhaust gas treatment device.

It is also an object of the present invention to improve regeneration of exhaust gas treatment devices in vehicles with internal combustion engines.

These objects are reached with a method of the type mentioned initially, comprising analyzing an output from the downstream gas sensor, and determining, at least partly based on said analysis, whether the exhaust gas treatment device is subjected to poisoning.

The invention is very advantageous for detecting poisoning caused by sulfur oxides. By using an output from the downstream gas sensor, a reliable diagnosis can be made, since downstream gas sensor outputs corresponding closely to the actual catalyst conditions are used for the sulfur poisoning level estimation. This means that, instead of being derived from a theoretical model, a determination whether the exhaust gas treatment device is subjected to poisoning can be based on a condition in close relationship with the actual exhaust gas treatment device. This will reduce the risk of erroneous evaluations of exhaust gas treatment device poisoning conditions, which in turn can serve to reduce frequencies of regeneration measures, and improve the operation of the exhaust gas treatment device.

Determining, at least partly based on the output from the downstream gas sensor, a value of a diagnosis parameter corresponding to or related to the oxygen storage capacity of the exhaust gas treatment device, wherein the determination whether the exhaust gas treatment device is subjected to poisoning is carried out partly based on the diagnosis parameter, will provide a further improved reliability concerning the determination whether the exhaust gas treatment device is subjected to poisoning.

In a preferred embodiment, the diagnosis parameter corresponds to a rate of change of the oxygen storage capacity of the exhaust gas treatment device, and the determination whether the exhaust gas treatment device is subjected to poisoning is carried out partly based on a comparison between said rate of change of the oxygen storage capacity and a predetermined threshold value. As will be described further below, examining the rate of change of the oxygen storage capacity as well as the deviation of the output of the downstream gas sensor will provide a very reliable poisoning detection method.

The objects are reached with a method according to claim 1.

Preferably, the step of analyzing an output from the downstream gas sensor includes comparing the output from the downstream sensor to a theoretical downstream sensor output. Thereby, sensor outputs corresponding closely to the actual catalyst conditions is compared to a theoretical model, which further improves the dependability of the poisoning detection method.

In one embodiment, the output from the downstream sensor and the theoretical downstream sensor output are compared based at least partly on a reference value of an exhaust gas property.

The method can also comprise determining a level of the output from the downstream sensor at a reference value of an exhaust gas property, determining a level of the theoretical downstream gas sensor output at the reference value of the exhaust gas property, and comparing the level of the output from the downstream sensor and the level of the theoretical downstream gas sensor output. Preferably, the downstream gas sensor is an oxygen sensor, and the exhaust gas property is the oxygen content of the exhaust gas. More preferably, the downstream gas sensor is a narrowband oxygen sensor and the reference value of the exhaust gas property corresponds to a rich air/fuel ratio.

When the exhaust gas property corresponds to a rich air/fuel ratio, a narrowband oxygen sensor presents an output that varies significantly with the poisoning level of the exhaust gas treatment device. Thus, a manner of obtaining a very reliable indication of a poisoning condition is provided.

Thereby, the method can comprise determining a deviation of the level of the output from the downstream sensor from the level of the theoretical downstream gas sensor output, and comparing the deviation to a predetermined threshold value. Thus, if the deviation is above the predetermined threshold value, it can be determined that the exhaust gas treatment device is subjected to poisoning.

Preferably, the method comprises controlling an air/fuel ratio of an air/fuel mixture provided in at least one of the cylinders so as to periodically become rich. This especially advantageous when the downstream gas sensor is a narrowband oxygen sensor, since a rich air/fuel ratio gives a sensor response that varies significantly with the poisoning level of the exhaust gas treatment device. Thus, a manner of obtaining a very reliable indication of a poisoning condition is provided, while the periodic rich operation allows intermittent lean or stoichiometric operation, so that emissions can be kept low, and fuel consumption and other operational conditions are not adversely affected.

Preferably, the air/fuel ratio is controlled so that it oscillates around a stoichiometric value, preferably between two extreme values. Thus, a reliable indication of a poisoning condition can be provided, while the air/fuel ratio can be controlled so as to be "balanced" between alternating rich and lean operations.

Preferably, the method comprises estimating, at least partly based on said analysis of the output of the downstream gas sensor, a fuel sulfur level. Thereby, a fuel sulfur content value programmed in an engine control unit will be continuously adjusted in order to correspond to the actual content, so as to continuously improve the detection method, and to adjust it to a varying fuel sulfur content.

For the estimation of the fuel sulfur level, preferably, the step of analyzing an output from the downstream gas sensor includes comparing the output from the downstream sensor to a theoretical downstream sensor output being based at least partly on a stored fuel sulfur level value, and the step of estimating a fuel sulfur level comprises adjusting the stored fuel sulfur level value. In a preferred embodiment, the method comprises determining an output deviation of the output from the downstream sensor from the theoretical downstream sensor output, and determining a rate of change of the output deviation, the step of adjusting the stored fuel sulfur level value being based at least partly on the rate of change of the output deviation.

Preferably, the exhaust gas treatment device is a first exhaust gas treatment device, and the engine system comprises a second exhaust gas treatment device located downstream of the first exhaust gas treatment device. Thereby, the second exhaust gas treatment device can be located downstream of the downstream gas sensor. The second exhaust gas treatment device serves as a buffer for any emissions released from the first exhaust gas treatment device during its regeneration, specially due to the high and low oxygen time intervals. Thereby, it is possible to provide the effective poisoning detection of the first exhaust gas treatment device with no increase in emissions from the engine system. However, it should be noted that the detection of poisoning of the first exhaust gas treatment device can also be carried out in an engine system not presenting any further exhaust gas treatment device downstream of the first exhaust gas treatment device.

The objects are also reached with an engine system according to any of the claims 16-30

DESCRIPTION OF THE FIGURES

Below, the invention will be described in detail with reference to the drawings, in which

- fig. 1 shows a schematic view of parts of a vehicle engine system,
- fig. 2 shows a diagram with outputs from a gas sensor located downstream of a catalytic converter in the engine system partly depicted in fig. 1,
- fig. 3 shows, in a time domain, an upper diagram of the lambda value of an air fuel mixture provided to an engine in the engine system partly depicted in fig. 1, and a lower diagram of the an output from the gas sensor located downstream of the catalytic converter in the engine system partly depicted in fig. 1,
- fig. 4 shows a block diagram depicting a method, according to one embodiment of the invention,
- fig. 5 shows diagrams corresponding to the ones shown in fig. 3,
- fig. 6 is a diagram showing downstream gas sensor outputs (C) as functions of the amount of air (or mass of air and fuel) allowed to the engine (M), and
- fig. 7 shows a schematic view of a portion of a vehicle engine system according to an alternative embodiment of the invention.

DETAILED DESCRIPTION

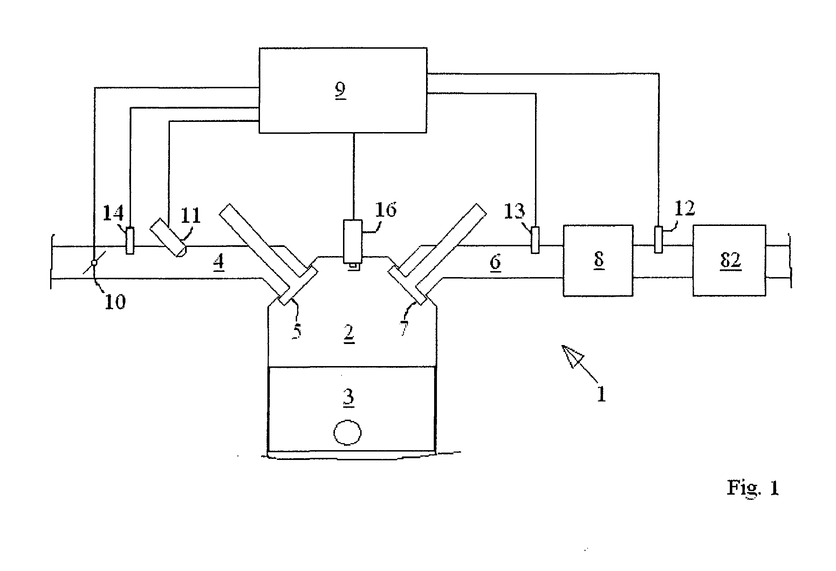

Fig. 1 shows a schematic view of parts of a vehicle engine system 1 comprising an internal combustion engine. The engine comprises at least one cylinder 2 with a reciprocating piston 3. Communication between the cylinder 2 and an inlet duct 4 is controlled by at least one inlet valve 5, and communication between the cylinder 2 and an exhaust duct 6 is controlled by at least one exhaust valve 7. Downstream of the cylinders 2, an exhaust gas treatment device 8, in this presentation referred to as a first exhaust gas treatment device 8 or a first catalytic converter 8, is provided. Downstream of the first exhaust gas treatment device 8, a second exhaust gas treatment device 82, here also referred to as a second catalytic converter, is provided.

The engine system 1 also comprises an engine control unit (ECU) 9, which can be provided as one unit or more than one logically interconnected physical units. The ECU 9 is adapted to control a throttle valve 10, and fuel injection means 11 in the inlet duct 4.

The fuel injection means 11 comprises at least one fuel injector 11 in the inlet duct 4. In this embodiment, where the engine presents more than one cylinder, the fuel injection can be controlled individually for each cylinder, by a fuel injector being provided at a separate portion of the inlet duct 4 communicating with the respective cylinder, (so called port fuel injection). Alternatively, as is known in the art, a fuel injector can be provided in each cylinder 2, (so called direct fuel injection). As a further alternative, one single fuel injector can be provided for more than one cylinder, or all cylinders, for example at an upstream portion of the inlet duct communicating with more than one cylinder, or all cylinders. The fuel injection means 11 communicate with fuel storage means in the form of a fuel tank 20, via a fuel pump 21.

The ECU 9 is also adapted to receive output signals from a downstream gas sensor 12 located downstream of the first catalytic converter 8, and upstream of the second catalytic converter 82. The ECU 9 is further adapted to receive output signals from an upstream gas sensor 13 located in the exhaust duct 6 between the cylinder 2 and the first catalytic converter 8. The ECU 9 is adapted to determine, based on outputs from the downstream and upstream sensors 12, 13, the oxygen content in the exhaust gases upstream and downstream, respectively, of the first catalytic converter 8. As is known in the art, the oxygen content in the exhaust gases is indicative of the lambda value of the air/ fuel mixture provided to the engine.

The downstream gas sensor can alternatively be located so as to detect gas directly in the first catalytic converter 8. Thereby, preferably the downstream gas sensor is located downstream of an upstream end of the first catalytic converter 8. As a further alternative the downstream gas sensor can be located so as to detect gas directly in the second catalytic converter 82.

The gas sensors are provided in the form of lambda or oxygen sensors. In this example, the downstream gas sensor 12 is a so called narrowband (binary) oxygen sensor, giving a highly non-linear relationship between the oxygen content of the exhaust gas and the output signal voltage. The upstream gas sensor 13 is a wideband (linear) sensor, giving a more linear relationship between the oxygen content and the output signal voltage.

In addition, the ECU 9 is also adapted to receive output signals from an air flow sensor 14 located in the inlet duct 4. As an alternative, as is known in the art, the air flow can be computed based on parameters such as the inlet manifold pressure, throttle position, engine speed, inlet temperature, and atmospheric pressure. In addition, as is known in the art, the ECU 9 is adapted to determine the exhaust gas temperature based on parameters such as the engine rotational speed, the inlet manifold pressure, the air/fuel ratio, the engine coolant temperature, and, in the case of spark ignition engines, the spark advance position. As an alternative, the ECU 9 can be adapted to receive output signals from a temperature sensor located in the exhaust duct 6 between the cylinder 2 and the first catalytic converter 8.

Further, at each cylinder, ignition means 16 comprising a spark plug 16 are provided and controllable individually by the ECU 9. However, the invention is also applicable to internal combustion engines with non-spark ignition, such as diesel engines or HCCI (Homogenous Charge Combustion Ignition) engines.

The ECU 9 is adapted to analyze the output from the downstream gas sensor 12, in a manner described below.

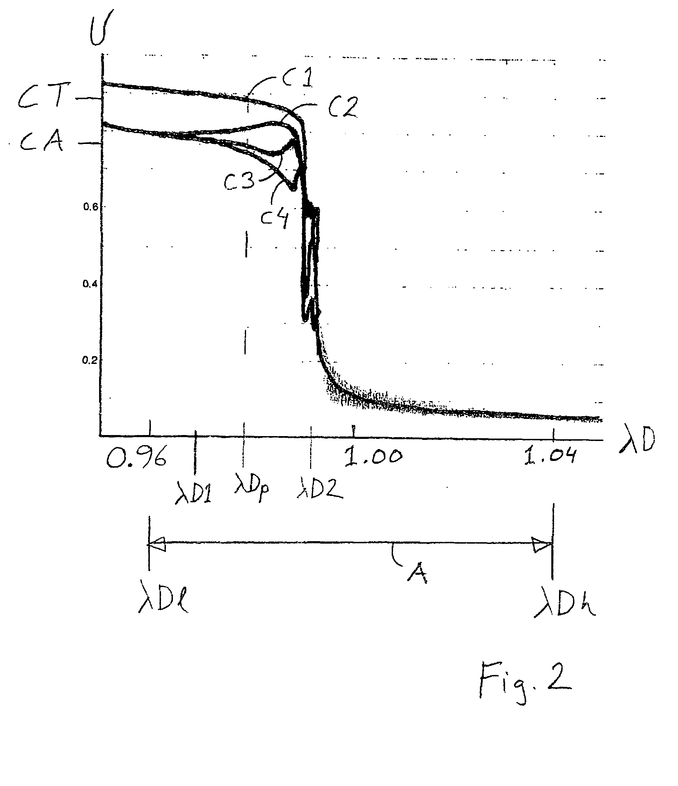

Fig. 2 shows a diagram with four examples of signals, expressed as the voltage output, U, from the downstream gas sensor 12, as a function of a lambda value $\lambda D$, corresponding to the oxygen content of exhaust gases downstream of the first catalytic converter 8. Each example is represented by a curve in fig. 2, and corresponds to a certain level of sulfur poisoning of the first catalytic converter 8. More specifically, the curve C1 represent the downstream gas sensor 12 output at a relatively low degree of sulfur poisoning of the first catalytic converter 8. The curve C2 represent the output at a degree of sulfur poisoning which is higher than in the case of the curve C1, the curve C3 represent the output at a sulfur poisoning degree which is higher than in the case of the curve C2, and the curve C4 represent the output at a sulfur poisoning degree which is higher than in the case of the curve C3.

It should be mentioned that the ECU 9 is adapted to adjust the downstream gas sensor output based on other influences, for example the first catalytic converter temperature, so that conclusions can be drawn from the output regarding the sulfur poisoning in the manner shown in fig. 2.

It can be seen that at each degree of sulfur poisoning, the output curve C1-C4 presents individual features which makes it distinguishable from the other curves. Specially, at downstream exhaust gas oxygen contents corresponding to lambda values in the rich region $\lambda D1 - \lambda D2$ in fig. 2, the curves differ from each other.

The ECU 9 is adapted to compare the actual downstream gas sensor output to a theoretical sensor output determined based on stored models for the first catalytic converter and the downstream gas sensor. It should be mentioned that for this comparison, the actual downstream gas sensor output can be in the form of a signal obtained directly from the downstream gas sensor 12, or in the form of an adjusted downstream gas sensor 12 signal, for example by filtering or by some other signal treatment measure known in the art.

More specifically, the ECU 9 is adapted to store a model of the first catalytic converter 8, comprising modeled response algorithms for a number of input parameters. The ECU 9 is adapted to obtain values of the air mass flow from the air flow sensor 14, and values of lambda from the upstream gas sensor 13, and to determine the exhaust temperature as mentioned above. The ECU 9 is further adapted to determine, based at least partly on these values, and the stored catalyst model, theoretical values of the oxygen content (lambda) and exhaust temperature downstream of the first catalytic converter. This is done based on the following principles: If the air mass flow increases, the temperature downstream of the first catalytic converter increases as well since the energy flow increase with the mass flow. Also, as will be described closer below, the first catalytic converter has a certain oxygen storage capacity. If the air mass flow increases, lambda (the oxygen content) downstream of the first catalytic converter is affected, since, in the case of a lean air/fuel mixture, the amount of oxygen stored will reach the "ceiling" of the first catalytic converter oxygen storage capacity faster than if the air mass flow is lower, and, in the case of a rich air/fuel mixture, the amount of oxygen stored will be consumed more quickly than if the air mass flow is lower. Therefore, if the air mass flow is increased, an oxygen storage level frequency of the first catalytic converter will increase as well.

The ECU 9 is also adapted to store a model of the downstream gas sensor 12. Thereby, the ECU 9 is adapted to determine, based at least partly on the theoretical values of lambda (the oxygen content) and exhaust temperature downstream of the first catalytic converter, and the stored downstream gas sensor model, a theoretical downstream gas sensor output. The ECU 9 is adapted to compare the theoretical downstream gas sensor output to the actual output from the downstream gas sensor 12, for example as depicted in fig. 2.

As mentioned, the output from the narrowband downstream gas sensor differs depending on the sulfur poisoning degree of the first catalytic converter. Specially in the rich lambda region, (e.g. within $\lambda D1 - XD2$ in fig. 2), the curves differ from each other. Therefore, referring to fig. 2, for the ECU 9 is adapted to determine the actual downstream gas sensor output level CA, and the theoretical downstream gas output level CT at a reference value of an exhaust gas property, in this embodiment an exhaust gas oxygen content corresponding to a reference lambda value, λDp, which is lower than 1. In general, the reference lambda value should be chosen so that it gives a clear and large output deviation depending on the sulfur poisoning degree of the first catalytic converter 8.

In order to allow this determination, the ECU 9 is adapted to control, at least partly based on control of the throttle valve 10 and the fuel injection means 11, the lambda value so that it periodically becomes lower than 1. More specifically, the ECU 9 is adapted to control the lambda value so as to oscillate around 1.

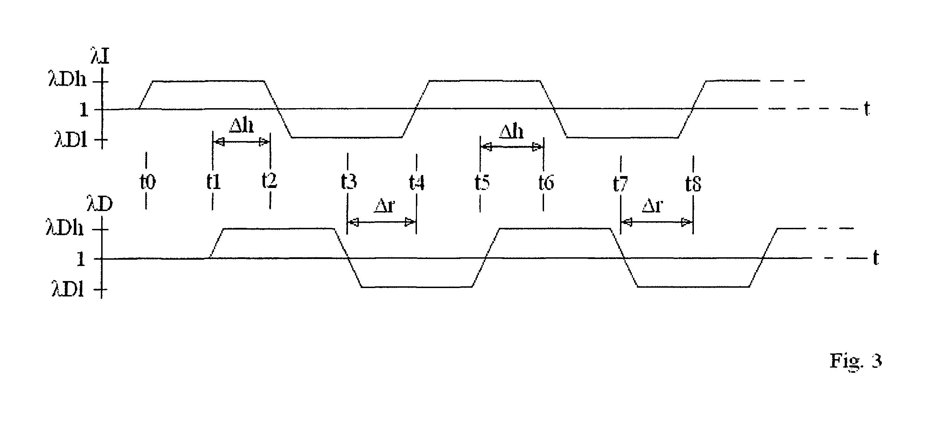

Particularly, referring to the upper diagram in fig. 3, the lambda value λI of an air/fuel mixture provided to the engine is controlled so as to oscillate, between two extreme values, λD1 and λDh. In this lambda control, the lambda value λI is controlled at a time t0 (fig. 3), so as to become higher than 1. Referring to the lower diagram in fig. 3, at a time t1, following t0, the ECU detects 206, based on the output from the downstream gas sensor 12, an increase of the oxygen content downstream the first catalytic converter 8, corresponding to the upper extreme lambda value λDh. The time delay, t0-t1, from the increase of the lambda value λI of the air/fuel mixture to the oxygen increase detection downstream of the first catalytic converter 8 is largely due to oxygen storage in the first catalytic converter 8. More specifically, a surplus of oxygen in the exhaust gases is adsorbed in the first catalytic converter 8, and when the oxygen storage has reached the maximum oxygen storage capacity of the first catalytic converter 8, oxygen is transported through the converter without being stored and as a result the downstream gas sensor 12 reacts to the increased oxygen content.

Before controlling the lambda λI so at so decrease, the ECU 9 determines a time interval, t1-t2, here referred to as a high oxygen time interval Δh, and allows the engine to operate on a lambda higher than 1 during the high oxygen time interval. At the end of the high oxygen time interval Δh following the detection of the increase of the oxygen content, the lambda value λI is controlled so as to decrease at a time t2.

The amplitude (λDh-1) of the lambda increase and the high oxygen time interval Ah are determined based on the air flow through the inlet duct 4, in turn based on signals received from the air flow sensor 14, the first catalytic converter temperature, and the first catalytic converter ageing status.

Particularly, if the air flow (or mass flow) is relatively high, the high oxygen time interval Δh is chosen to be relatively short. Contrarily, if the air flow is relatively low, the high oxygen time interval Δh is chosen to be relatively long. Also, alternatively, or in addition, if the air flow is relatively high, the amplitude of the lambda increase is chosen to be relatively small. Contrarily, if the air flow is relatively low, the amplitude of the lambda increase is chosen to be relatively large.

Further, if the catalytic converter temperature is relatively high, the high oxygen time interval Δh is chosen to be relatively long. Contrarily, if the catalytic converter temperature is relatively low, the high oxygen time interval Δh is chosen to be relatively short. Also, alternatively, or in addition, if the catalytic converter temperature is relatively high, the amplitude of the lambda increase is chosen to be relatively large. Contrarily, if the catalytic converter temperature is relatively low, the amplitude of the lambda increase is chosen to be relatively small.

Thus, during the poisoning detection, subsequent high oxygen time intervals and/or amplitudes of subsequent lambda increases are repetitively adjusted based on the air flow, and the first catalytic converter temperature.

At the time t2, the lambda value ΔI is controlled so as to become lower than 1, and reach the lower extreme value λD1. In an alternative embodiment, the lambda value is allowed to stay approximately 1, before being changed so as to become lower than 1. The amplitude (1-λD1) of the lambda decrease is determined by the ECU 9 as described below.

At a time t3, following t2, the ECU detects, based on signals from the downstream gas sensor 12, a decrease of the oxygen content 02 downstream the first catalytic converter 8, corresponding to the lower extreme lambda value λD1. Similar to the case of lambda being above 1, the time delay, t2-t3, from the decrease of the lambda value λI of the air/fuel mixture to the oxygen decrease detection downstream of the first catalytic converter 8 is largely due to oxygen storage in the first first catalytic converter 8. More specifically, oxygen stored in the first catalytic converter 8 is during the time interval t2-t3 used in oxidation processes of the converter, and when the oxygen has been reduced to a minimum level, the oxygen content downstream of the converter decreases.

Before controlling the lambda so at so increase, the ECU 9 determines, as described below, a time interval, t3-t4, here referred to as a low oxygen time interval Δr, and allows the engine to operate on a lambda lower than I during the low oxygen time interval Δr.

Similar to the amplitude of the lambda increase and the high oxygen time interval Δh, the amplitude (1-λD1) of the lambda decrease and the low oxygen time interval Δr are determined based on the air flow, and the first catalytic converter temperature. Thus, during the poisoning detection, subsequent low oxygen time intervals and/or amplitudes of subsequent lambda decreases are repetitively adjusted.

Also, the high and low oxygen time intervals Δh, Δr and/or the amplitudes of lambda increases and decreases can be adjusted based on the first catalytic converter ageing status, determined as mentioned below. In general, with more ageing of the first catalytic converter, the high and low oxygen time intervals Δh, Δr and/or the amplitudes of lambda increases and decreases can be adjusted so as to be shorter and smaller, respectively.

Thus, since the time intervals of individual phases of the oscillation, such as the low oxygen time interval $\Delta r$, varies, the frequency of the lambda value oscillation will vary as well. It should also be mentioned that the amplitudes ($\lambda Dh$-1, 1-$\lambda D1$) of the oscillation are chosen so as to not allow any increase of exhaust emissions.

Fig. 2 indicates, by the double arrow A, the oscillation of the lambda value $\lambda D$ corresponding to the exhaust gas oxygen content downstream of the first catalytic converter, caused by the oscillation of the lambda value $\lambda I$ of the air/fuel mixture provided to the engine.

As also mentioned below, controlling the lambda value so as to oscillate around 1 is also advantageous for regenerating the first catalytic converter, as described more closely in the European patent application entitled "A method for regeneration of an exhaust gas treatment device in an engine system and an engine system", filed by the applicant on the first filing date of the present application, and incorporated herein by reference.

Thus, referring to fig. 2, the control of the lambda value so that it oscillates around 1, allows the ECU 9 to analyze the downstream gas sensor 12 output in the rich lambda region, (e.g. at the reference lambda value $\lambda Dp$ in fig. 2), where the differences between the curves for the different sulfur poisoning degrees are particularly pronounced.

The ECU is adapted to, when analyzing the downstream gas sensor output, take the exhaust gas temperature into consideration, since the sensor output, especially in the case of a narrowband sensor, is dependent upon the temperature.

For analyzing the output from the downstream gas sensor 12, as an alternative to using catalyst and sensor models, the ECU can be adapted to store statistical data mapping typical downstream gas sensor output responses to typical sulfur poisoning degrees, and also to compare the actual downstream gas sensor output to this statistical data.

A deviation of the downstream gas sensor output indicates that the catalyst is subjected to sulfur poisoning. Combined with information about the rate of oxygen storage capacity deterioration, the downstream gas sensor output information can provide a high degree of certainty regarding the degree of sulfur poisoning. Therefore, the ECU 9 is also adapted to determine, based on outputs from the downstream and upstream sensors 12, 13, a value of a diagnosis parameter P2 corresponding to or related to the oxygen storage capacity of the first catalytic converter 8, in a manner described further below.

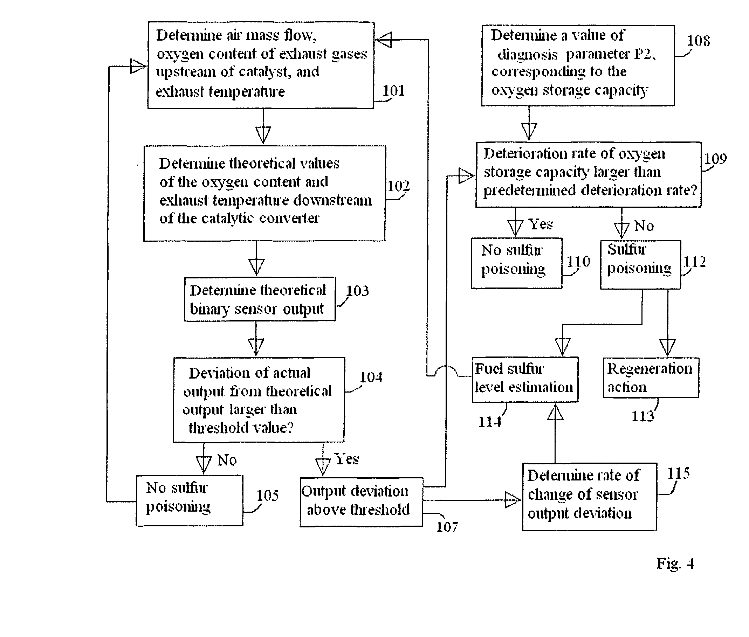

Fig. 4 shows a block diagram depicting a method, according to one embodiment of the invention, carried out by the ECU 9 for determining the sulfur poisoning of the catalyst 8. The ECU 9 obtains values of the air mass flow from the air flow sensor 14, and values of lambda (the exhaust oxygen content) from the upstream gas sensor 13, and determines the exhaust temperature, (block 101). Based at least partly on these values, and the stored catalyst model, the ECU 9 determines theoretical values of lambda (the oxygen content) and exhaust temperature downstream of the first catalytic converter, (block 102).

Reference is also made to fig. 2. As an example, it is assumed that that the curve C1 corresponds to theoretical downstream gas sensor output determined by means of the models stored in the ECU 9, and the curve C3 corresponds to actual downstream gas sensor output. Thus, based at least partly on the theoretical values of lambda (the oxygen content) and exhaust temperature downstream of the first catalytic converter, and the stored downstream gas sensor model, the ECU 9 determines a theoretical downstream gas sensor output CT at the reference lambda value $\lambda Dp$, (fig. 4, block 103). The ECU 9 also determines an actual downstream gas sensor output CA at a downstream exhaust gas oxygen content corresponding to the reference lambda value $\lambda Dp$. The theoretical and actual outputs are compared, (block 104), and a deviation, CT - CA, of the actual output from the theoretical output is determined, and it is detennined whether this deviation is larger than a predetermined threshold value eCp.

If the output deviation is lower than the predetermined deviation threshold eCp for the output deviation, it is determined that the first catalytic converter is not being degraded by sulfur poisoning, (block 105).

If the output deviation is higher than the predetermined deviation threshold eCp for the output deviation, (block 107), this is taken as an indication that the first catalytic converter 8 is subjected to sulfur poisoning. In order to establish a more certain diagnosis, a value of the diagnosis parameter P2, corresponding to the deterioration rate of oxygen storage capacity of the first catalytic converter 8, is used as described here below. The ECU 9 is adapted to continuously determine values of the diagnosis parameter P2, (block 108).

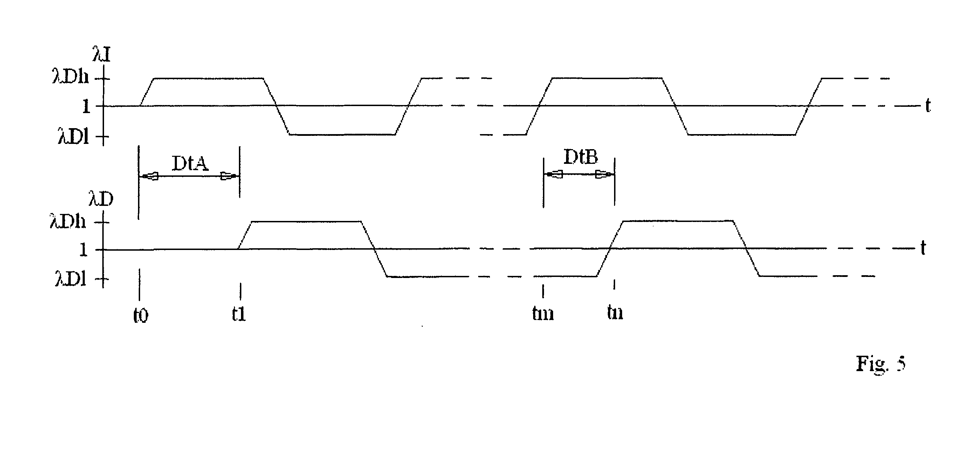

Reference is made to fig. 5, showing two diagrams corresponding to the ones in fig. 3. As mentioned above, the lambda value $\lambda I$ is controlled so as to oscillate around the value 1. Thus, in this example, at a time t0, the lambda value $\lambda I$ is controlled so as to increase to the upper extreme value $\lambda Dh$. For reasons of simplicity, it can be assumed that the oxidation processes (e.g. of CO and HC) of the catalyst converter 8 consumes oxygen at a rate corresponding to the rate of oxygen production of its reduction processes (e.g. of NOx). Thus, due to oxygen storage, there is a time interval DtA from the time t0 until a time t1, at which the lambda value $\lambda D$ corresponding to the oxygen content at the downstream gas sensor 12 increases so as to correspond to the upper extreme value $\lambda Dh$.

Subsequently, at a time tm, the lambda value $\lambda I$ is controlled so as to increase to the upper extreme value $\lambda Dh$. Again, due to oxygen storage, there is a time interval DtB from the time tm until a time tn, at which the lambda value $\lambda D$ corresponding to the oxygen content at the downstream gas sensor 12 increases so as to correspond to the upper extreme value $\lambda Dh$.

For simplicity of this presentation, it is assumed that at the air flow (mass flow) is the same during both time intervals DtA, DtB of the downstream sensor response delay. Of course, in many situations, the air flow varies during the engine operation, and therefore, these time intervals can be adjusted so as to be independent of a varying air flow or mass flow.

Assuming a constant air flow, it can be seen in fig. 5 that, from the time t0 to the time tm, the oxygen storage capacity of the first catalytic converter 8 has decreased. The ECU 9 is adapted to determine the diagnosis parameter P2 as an oxygen storage capacity deterioration rate formed by the ratio of the oxygen storage capacity deterioration, DtA-DtB, and the time interval, tm-t0, between the events at which the oxygen storage capacity DtA, DtB was determined, i.e. P2=(DtA-DtB)/(tm-t0). (Similarly to the time intervals DtA, DtB of the downstream sensor response delay, the time interval, tm-t0, between them can be adjusted so as to be independent of a varying air flow or mass flow.)

Of course, the diagnosis parameter P2, corresponding to or related to the oxygen storage capacity of the first catalytic converter 8, can be determined in a variety of alternative ways, for example based on an "oxygen storage capacity natural frequency" of the converter 8.

It should be mentioned that the oxygen storage capacity of the first catalytic converter is typically dependent upon the temperature, and therefore the latter is used by the ECU 9 to minimize influences of the temperature when determining the oxygen storage capacity deterioration rate.

Referring to fig. 4, if the output deviation is higher than the predetermined deviation threshold eCp for the output deviation, (block 107), it is determined whether the deterioration rate P2 of oxygen storage capacity of the first catalytic converter 8, is larger than a predetermined deterioration rate P2p, (block 109). Preferably, the predetermined deterioration rate P2p is based at least partly on an estimation of the ageing status of the first catalytic converter 8. The ECU 9 is adapted to perform such an estimation based on a stored predetermined relationship between the oxygen storage capacity DtA, DtB and the first catalytic converter ageing.

If it is determined that the deterioration rate P2 of oxygen storage capacity is larger than the predetermined deterioration rate P2p, it is determined that the downstream gas sensor output deviation CT - CA is not caused by sulfur poisoning, (block 110). In such a case, the output deviation CT - CA can be caused by some other type of engine system malfunction, for example a first catalytic converter damage caused by a misfire of the engine, or a first catalytic converter damage caused by any type of temperature chock.

However, if it is determined that the deterioration rate P2 of oxygen storage capacity is lower than the predetermined deterioration rate P2p, it is determined that the downstream gas sensor output deviation CT - CA is caused by sulfur poisoning, (block 112). Based on this determination, a catalyst regeneration action is perfoned, (block 113). The catalyst regeneration action can be any suitable action, for example a regeneration described in said European patent application entitled "A method for regeneration of an exhaust gas treatment device in an engine system and an engine system", filed by the applicant on the first filing date of the present application, and incorporated herein by reference. Thereby, the lambda oscillation described above can simply be continued upon catalytic converter poisoning detection as described in said European patent application. Preferably, the amplitude and/or the high and low oxygen time intervals $\Delta h$, $\Delta r$ are increased during the regeneration.

Also, if it is determined that the downstream gas sensor output deviation is caused by sulfur poisoning, a fuel sulfur level estimation is performed, (block 114), and the catalyst model is adjusted based on the fuel sulfur level estimation. This fuel sulfur level estimation is performed based on the rate of change of the downstream gas sensor output deviation CT - CA.

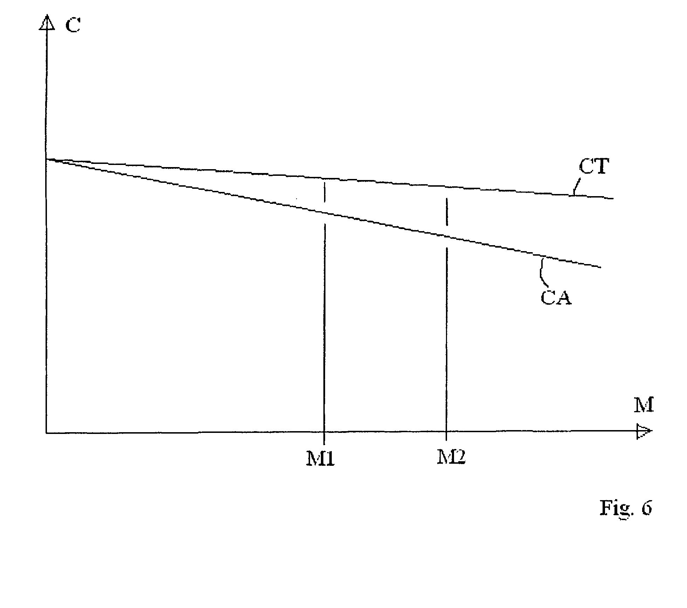

Fig. 6 is a diagram showing downstream gas sensor outputs (C) as functions of the amount of air (or mass of air and fuel) allowed to the engine (M). For the fuel sulfur level estimation, the ECU 9 is adapted to map the amount of air (or mass of air and fuel) allowed to the engine (M), to values of the theoretical downstream gas sensor output CT and the actual downstream gas sensor output CA. At a certain time, when a first amount of air M1 has been allowed to the engine, the deviation of the actual downstream gas sensor output from the theoretical downstream gas sensor output, CT(M1)-CA(M1) is determined. At a subsequent point in time, when a second amount of air M2 has been allowed to the engine, the deviation of the actual downstream gas sensor output from the theoretical downstream gas sensor output, CT(M2)-CA(M2) is again determined.

The fuel sulfur level is assumed to be proportional to the rate of sulfur deposit buildup in the first catalytic converter, as mapped against the amount of air allowed to the engine M. The theoretical downstream gas sensor output CT is determined based partly on a stored fuel sulfur level value. If the actual fuel sulfur level differs from the stored estimation thereof, the deviation of the actual downstream gas sensor output CA from the theoretical downstream gas sensor output CT increases with the amount of air allowed to the engine, as can be seen in fig. 6. Therefore, the fuel sulfur level estimation (block 114, fig. 4) comprises adjusting the stored estimation of the fuel sulfur level with a value based on the rate of change $\Delta C/\Delta M$ of the sensor output deviation CT-CA, determined (block 115, fig. 4) as

$$\Delta C/\Delta M = (CT(M2)\text{-}CA(M2) - CT(M1)\text{-}CA(M1)) / (M2\text{-}M1).$$

As mentioned, the engine system comprises a second catalytic converter 82 located downstream of the first catalytic converter 8, the sulfur poisoning of which is to be detected. The second catalytic converter 82 serves as a buffer for any emissions released from the analyzed first catalytic converter 8, specially due to the extended periods of lean and rich operations, i.e. the high and low oxygen time intervals $\Delta h$, $\Delta r$, (fig. 3).

The ECU 9 is adapted to store a model of the second catalytic converter 82, comprising modeled response algorithms for a number of input parameters. Based on this model, the ECU 9 can control the lambda value so that emission levels downstream of the second catalytic converter 82 are kept to a minimum. The model of the second catalytic converter 82 provides data on emission substances in the exhaust gases downstream of the second catalytic converter 82, at least partly by modeling the oxygen storage capacity of the second catalytic converter, more particularly based on input parameters such as the air mass flow, and the exhaust temperature obtained as described above, as well as the oxygen content downstream of the first catalytic converter 8 obtained from signals from the downstream gas sensor 12. Thereby, the lambda value can be controlled so as to adjust the high and low oxygen time intervals $\Delta h$, $\Delta r$ and/or the maximum and minimum lambda values $\lambda Dh$, $\lambda Dl$ (fig. 3) in the oscillations described above, in order to minimize emission levels downstream of the second catalytic converter 82.

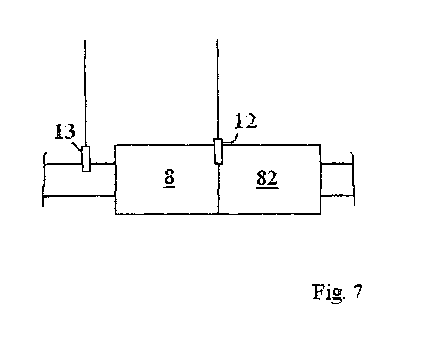

Above, the catalytic converters 8, 82 are separate units in the exhaust gas system. Alternatively, as depicted in fig. 7, the catalytic converters 8, 82 can be provided as integrated units. Thereby, the downstream gas sensor 12 can be located at an interface between the catalytic converters 8, 82. It also should be mentioned that the engine system can comprise at least one further catalytic converter downstream of the second catalytic converter, or alternatively present no catalytic converter downstream of the first catalytic converter.

It should also be mentioned that in an alternative embodiment the lambda value can be controlled so as to be decreased or increased immediately upon a detection of an increase or a decrease, respectively, of the oxygen content downstream of or within the first exhaust gas treatment device 8. This means that high and low oxygen time intervals $\Delta h$, $\Delta r$ are zero.

Besides exhaust gas treatment device poisoning caused by sulfur, the invention is equally applicable to detecting poisoning cased by other substances, such as lead, zinc, manganese, silicon and phosphorus.

In the embodiment described above, the downstream gas sensor 12 is a narrowband sensor, and the upstream gas sensor 13 is a wideband sensor. However, in alternative embodiments, any of the downstream and upstream gas sensors 12, 13 can be narrowband or wideband sensors. For example, the downstream sensor can be a wideband sensor, since the output of such a sensor changes, as do the output of a narrowband sensor, when the degree of sulfur poisoning changes in the first catalytic converter. Thus, the changes in the output from a wideband sensor can be used in a manner similar to what has been described above, to detect sulfur poisoning of the first catalytic converter.

In further alternatives, other types of sensors can be used as any of the downstream and upstream gas sensors, such as nitrogen oxide (NOx) sensors, or hydrocarbon (HC) sensors. Specifically, a nitrogen oxide (NOx) sensor can be used as the downstream gas sensor 12. When located downstream of the first catalystic converter 8, a detected decrease in the conversion of NOx can be used as an indication that the catalyst is subjected to sulfur poisoning. Similarly, when a HC sensor is used as the downstream gas sensor 12, a detected change of HC content can be used as an indication that the catalyst is subjected to sulfur poisoning.

As an alternative to the embodiment described above, in order to diagnose the sulfur poisoning degree of the first catalytic converter, the output from the upstream gas sensor 13 can be replaced by the lambda value upstream of the first catalytic converter calculated, as is known in the art, based on values of air and fuel injected to the engine, and stored models of the engine and possibly the first catalytic converter.

**Claims**

1.  A method for an exhaust gas treatment device (8) in an engine system (1) comprising an internal combustion engine with at least one cylinder (2), and a downstream gas sensor (12), located downstream of, or at least partly within, the exhaust gas treatment device (8), the method comprising analyzing an output from the downstream gas sensor (12), and determining, at least partly based on said analysis, whether the exhaust gas treatment device (8) is subjected to poisoning, **characterized in that** it further comprises determining, at least partly based on the output from the downstream gas sensor (12), a value of a diagnosis parameter (P2) corresponding to or related to the oxygen storage capacity of the exhaust gas treatment device (8), wherein the determination whether the exhaust gas treatment device is subjected to poisoning is carried out partly based on the diagnosis parameter (P2), the diagnosis parameter (P2) corresponding to a rate of change (P2) of the oxygen storage capacity of the exhaust gas treatment device (8), and the determination whether the exhaust gas treatment device is subjected to poisoning being carried out partly based on a comparison between said rate of change (P2) of the oxygen storage capacity and a predetermined threshold value (P2p).

2. A method according to any of the preceding claims, wherein the step of analyzing an output from the downstream gas sensor (12) includes comparing the output from the downstream sensor (12) to a theoretical downstream sensor output.

3. A method according to claim 2, wherein the output from the downstream sensor (12) and the theoretical downstream sensor output are compared based at least partly on a reference value (λDp) of an exhaust gas property.

4. A method according to any of the claims 2-3, comprising determining a level (CA) of the output from the downstream sensor (12) at a reference value (λDp) of an exhaust gas property, determining a level (CT) of the theoretical downstream gas sensor output at the reference value (λDp) of the exhaust gas property, and comparing the level (CA) of the output from the downstream sensor (12) and the level (CT) of the theoretical downstream gas sensor output.

5. A method according to claim 4, wherein the downstream gas sensor (12) is an oxygen sensor, and the exhaust gas property is the oxygen content of the exhaust gas.

6. A method according to claim 5 wherein the downstream gas sensor (12) is a narrowband oxygen sensor and the reference value (λDp) of the exhaust gas property corresponds to a rich air/fuel ratio.

7. A method according to any of the claims 4-6, comprising determining a deviation (CT - CA) of the level (CA) of the output from the downstream sensor (12) from the level (CT) of the theoretical downstream gas sensor output, and comparing the deviation (CT - CA) to a predetermined threshold value (eCp).

8. A method according to any of the preceding claims, comprising controlling an air/fuel ratio of an air/fuel mixture provided in at least one of the cylinders so as to periodically become rich.

9. A method according to claim 8, comprising controlling the air/fuel ratio so that it oscillates around a stoichiometric value.

10. A method according to claim 9, comprising controlling the air/fuel ratio so as to oscillate between two extreme values (λDl, λDh).

11. A method according to any of the preceding claims, comprising estimating, at least partly based on said analysis, a fuel sulfur level.

12. A method according to claim 11, wherein the step of analyzing an output from the downstream gas sensor (12) includes comparing the output from the downstream sensor (12) to a theoretical downstream sensor output being based at least partly on a stored fuel sulfur level value, and the step of estimating a fuel sulfur level comprises adjusting the stored fuel sulfur level value.

13. A method according to claim 12 comprising determining an output deviation (CT-CA) of the output from the downstream sensor (12) from the theoretical downstream sensor output, and determining a rate of change (ΔC/AM) of the output deviation (CT-CA), the step of adjusting the stored fuel sulfur level value being based at least partly on the rate of change (ΔC/ΔM) of the output deviation (CT-CA).

14. A method according to any of the preceding claims, wherein the exhaust gas treatment device is a first exhaust gas treatment device, and the engine system comprises a second exhaust gas treatment device (82) located downstream of the first exhaust gas treatment device (8).

15. A method according to claim 14, wherein the second exhaust gas treatment device (82) is located downstream of the downstream gas sensor (12).

16. An engine system comprising an internal combustion engine comprising at least one cylinder (2), an exhaust gas treatment device (8), a downstream gas sensor (12), located downstream of, or at least partly within, the exhaust gas treatment device (8), and an engine control unit (9), the engine control unit (9) being adapted to analyze an output from the downstream gas sensor (12), and to determine, at least partly based on said analysis, whether the exhaust gas treatment device (8) is subjected to poisoning, **characterized in that** the engine control unit (9) is adapted to determine, at least partly based on the output from the downstream gas sensor (12), a value of a diagnosis parameter (P2) corresponding to or related to the oxygen storage capacity of the exhaust gas treatment device (8), and to perform the determination, whether the exhaust gas treatment device is subjected to poisoning, partly based on the diagnosis parameter (P2), the diagnosis parameter (P2) corresponding to a rate of change (P2) of the oxygen storage capacity of the exhaust gas treatment device (8), and the engine control unit (9) being adapted to perform the determination, whether the exhaust gas treatment device is subjected to poisoning, partly based on a comparison between said rate of change (P2) of the oxygen storage capacity and a predetermined threshold value (P2p).

17. An engine system according to claim 16 wherein the engine control unit (9) is adapted to compare the output from the downstream sensor (12) to a theoretical downstream sensor output.

18. An engine system according to claim 17, wherein the engine control unit (9) is adapted to compare the output from the downstream sensor (12) and the theoretical downstream sensor output based at least partly on a reference value ($\lambda$Dp) of an exhaust gas property.

19. An engine system according to any of the claims 17-18, wherein the engine control unit (9) is adapted to determine a level (CA) of the output from the downstream sensor (12) at a reference value ($\lambda$Dp) of an exhaust gas property, to determine a level (CT) of the theoretical downstream gas sensor output at the reference value ($\lambda$Dp) of the exhaust gas property, and to compare the level (CA) of the output from the downstream sensor (12) and the level (CT) of the theoretical downstream gas sensor output.

20. An engine system according to claim 19, wherein the downstream gas sensor (12) is an oxygen sensor, and the exhaust gas property is the oxygen content of the exhaust gas.

21. An engine system according to claim 20, wherein the downstream gas sensor (12) is a narrowband oxygen sensor and the reference value ($\lambda$Dp) of the exhaust gas property corresponds to a rich air/fuel ratio.

22. An engine system according to any of the claims 19-21, wherein the engine control unit (9) is adapted to determine a deviation (CT - CA) of the level (CA) of the output from the downstream sensor (12) from the level (CT) of the theoretical downstream gas sensor output, and to compare the deviation (CT - CA) to a predetermined threshold value (eCp).

23. An engine system according to any of the claims 16-22, wherein the engine control unit (9) is adapted to control, by control of air flow control means (10) and/or fuel injection means (11) of the engine, an air/fuel ratio of an air/fuel mixture provided in at least one of the cylinders so as to periodically become rich.

24. An engine system according to claim 23, wherein the engine control unit (9) is adapted to control the air/fuel ratio so that it oscillates around a stoichiometric value.

25. An engine system according to claim 24, wherein the engine control unit (9) is adapted to control the air/fuel ratio so as to oscillate between two extreme values ($\lambda$Dl, $\lambda$Dh).

26. An engine system according to any of the claims 16-25 wherein the engine control unit (9) is adapted to estimate, at least partly based on said analysis, a fuel sulfur level.

27. An engine system according to claim 26, wherein the engine control unit (9) is adapted to, when analyzing the output from the downstream gas sensor (12), compare the output from the downstream sensor (12) to a theoretical downstream sensor output being based at least partly on a stored fuel sulfur level value, and to adjust, when estimating the fuel sulfur level, the stored fuel sulfur level value.

28. An engine system according to claim 27, wherein the engine control unit (9) is adapted to determine an output deviation (CT-CA) of the output from the downstream sensor (12) from the theoretical downstream sensor output, to determine a rate of change ($\Delta$C/$\Delta$M) of the output deviation (CT-CA), and to adjust the stored fuel sulfur level value based at least partly on the rate of change ($\Delta$C/$\Delta$M) of the output deviation (CT-CA).

29. An engine system according to any of the claims 16-28 wherein the exhaust gas treatment device is a first exhaust gas treatment device, and the engine system comprises a second exhaust gas treatment device (82) located downstream of the first exhaust gas treatment device (8).

30. An engine system according to claim 29, wherein the second exhaust gas treatment device (82) is located downstream of the downstream gas sensor (12).

**Patentansprüche**

1. Verfahren für eine Abgasnachbehandlungsvorrichtung (8) in einem Motorsystem (1), das einen Verbrennungsmotor mit wenigstens einem Zylinder (2) und einen auslassseitigen Gassensor (12), der sich auslassseitig oder wenigstens teilweise innerhalb der Abgasnachbehandlungsvorrichtung (8) befindet, umfasst, wobei das Verfahren das Analysieren einer Ausgabe von dem auslassseitigen Gassensor (12) und das Bestimmen, ob die Abgasnachbehandlungsvorrichtung (8) einer Vergiftung unterliegt, wenigstens teilweise anhand der Analyse, umfasst, **dadurch gekennzeichnet, dass** es ferner das Bestimmen eines Werts eines Diagnoseparameters (P2), der der Sauerstoffspeicherfähigkeit der Abgasnachbehandlungsvorrichtung (8) entspricht oder mit ihr zusammenhängt, wenigstens teilweise anhand der Ausgabe von dem auslassseitigen Gassensor (12) umfasst, wobei die Bestimmung, ob die Abgasnachbehandlungsvorrichtung der Vergiftung unterliegt, teilweise anhand des Diagnoseparameters (P2) ausgeführt wird, wobei der Diagnoseparameter (P2) einer Änderungsrate (P2) der Sauerstoffspeicherfähigkeit der Abgasnachbehandlungsvorrichtung (8) entspricht, und wobei die Bestimmung, ob die Abgasnachbehandlungsvorrichtung der Vergiftung unterliegt, teilweise anhand eines Vergleichs zwischen der Änderungsrate (P2) der Sauerstoffspeicherfähigkeit und einem vorgegebenen Schwellenwert (P2p) ausgeführt wird.

2. Verfahren nach einem der vorhergehenden Ansprüche, wobei der Schritt des Analysierens einer Ausgabe von dem auslassseitigen Gassensor (12) das Vergleichen der Ausgabe von dem auslassseitigen Sensor (12) mit einer theoretischen Ausgabe des auslassseitigen Sensors enthält.

3. Verfahren nach Anspruch 2, wobei die Ausgabe von dem auslassseitigen Sensor (12) und die theoretischen Ausgabe des auslassseitigen Sensors wenigstens teilweise anhand eines Referenzwerts (λDp) einer Abgaseigenschaft verglichen werden.

4. Verfahren nach einem der Ansprüche 2-3, das das Bestimmen eines Pegels (CA) der Ausgabe von dem auslassseitigen Sensor (12) bei einem Referenzwert (λDp) einer Abgaseigenschaft, das Bestimmen eines Pegels (CT) der theoretischen Ausgabe des auslassseitigen Gassensors bei dem Referenzwert (λDp) der Abgaseigenschaft und das Vergleichen des Pegels (CA) der Ausgabe von dem auslassseitigen Sensor (12) und des Pegels (CT) der theoretischen Ausgabe des auslassseitigen Gassensors umfasst.

5. Verfahren nach Anspruch 4, wobei der auslassseitige Gassensor (12) ein Sauerstoffsensor ist und die Abgaseigenschaft der Sauerstoffgehalt des Abgases ist.

6. Verfahren nach Anspruch 5, wobei der auslassseitige Gassensor (12) ein schmalbandiger Sauerstoffsensor ist und der Referenzwert (λDp) der Abgaseigenschaft einem fetten Luft/Kraftstoff-Verhältnis entspricht.

7. Verfahren nach einem der Ansprüche 4-6, das das Bestimmen einer Abweichung (CT - CA) des Pegels (CA) der Ausgabe von dem auslassseitigen Sensor (12) von dem Pegel (CT) der theoretischen Ausgabe des auslassseitigen Gassensors und das Vergleichen der Abweichung (CT - CA) mit einem vorgegebenen Schwellenwert (eCp) umfasst.

8. Verfahren nach einem der vorhergehenden Ansprüche, das das Steuern eines Luft/Kraftstoff-Verhältnisses eines in wenigstens einem der Zylinder bereitgestellten Luft/Kraftstoff-Gemischs in der Weise umfasst, dass es periodisch fett wird.

9. Verfahren nach Anspruch 8, das das Steuern des Luft/Kraftstoff-Verhältnisses in der Weise umfasst, dass es um einen stöchiometrischen Wert schwingt.

10. Verfahren nach Anspruch 9, das das Steuern des Luft/Kraftstoff-Verhältnisses in der Weise umfasst, dass es zwischen zwei Extremwerten (λDl, λDh) schwingt.

11. Verfahren nach einem der vorhergehenden Ansprüche, das das Schätzen eines Kraftstoffschwefelpegels wenigstens teilweise anhand der Analyse umfasst.

12. Verfahren nach Anspruch 11, wobei der Schritt des Analysierens einer Ausgabe von dem auslassseitigen Gassensor (12) das Vergleichen der Ausgabe von dem auslassseitigen Sensor (12) mit einer theoretischen Ausgabe des auslassseitigen Sensors, die wenigstens teilweise auf einem gespeicherten Kraftstoffschwefelpegelwert beruht, enthält und der Schritt des Schätzens eines Kraftstoffschwefelpegels das Einstellen des gespeicherten Kraftstoffschwefelpegelwerts umfasst.

13. Verfahren nach Anspruch 12, das das Bestimmen einer Ausgabeabweichung (CT - CA) der Ausgabe von dem auslassseitigen Sensor (12) von der theoretischen Ausgabe des auslassseitigen Sensors und das Bestimmen einer Änderungsrate ($\Delta C/\Delta M$) der Ausgabeabweichung (CT - CA) umfasst, wobei der Schritt des Einstellens des gespeicherten Kraftstoffschwefelpegelwerts wenigstens teilweise auf der Änderungsrate ($\Delta C/\Delta M$) der Ausgabeabweichung (CT - CA) beruht.

14. Verfahren nach einem der vorhergehenden Ansprüche, wobei die Abgasnachbehandlungsvorrichtung eine erste Abgasnachbehandlungsvorrichtung ist und das Motorsystem eine zweite Abgasnachbehandlungsvorrichtung (82) umfasst, die sich auslassseitig der ersten Abgasnachbehandlungsvorrichtung (8) befindet.

15. Verfahren nach Anspruch 14, wobei sich die zweite Abgasnachbehandlungsvorrichtung (82) auslassseitig des auslassseitigen Gassensors (12) befindet.

16. Motorsystem, das einen Verbrennungsmotor, der wenigstens einen Zylinder (2) umfasst, eine Abgasnachbehandlungsvorrichtung (8), einen auslassseitigen Gassensor (12), der sich auslassseitig davon oder wenigstens teilweise innerhalb der Abgasnachbehandlungsvorrichtung (8) befindet, und eine Motorsteuereinheit (9) umfasst, wobei die Motorsteuereinheit (9) zum Analysieren einer Ausgabe von dem auslassseitigen Gassensor (12) und zum Bestimmen, ob die Abgasnachbehandlungsvorrichtung (8) der Vergiftung unterliegt, wenigstens teilweise anhand der Analyse ausgelegt ist, **dadurch gekennzeichnet, dass** die Motorsteuereinheit (9) zum Bestimmen eines Werts eines Diagnoseparameters (P2), der der Sauerstoffspeicherfähigkeit der Abgasnachbehandlungsvorrichtung (8) entspricht oder mit ihr zusammenhängt, wenigstens teilweise anhand der Ausgabe von dem auslassseitigen Gassensor (12), und zum Ausführen der Bestimmung, ob die Abgasnachbehandlungsvorrichtung der Vergiftung unterliegt, teilweise anhand des Diagnoseparameters (P2), ausgelegt ist, wobei der Diagnoseparameter (P2) einer Änderungsrate (P2) der Sauerstoffspeicherfähigkeit der Abgasnachbehandlungsvorrichtung (8) entspricht, und dass die Motorsteuereinheit (9) zum Ausführen der Bestimmung, ob die Abgasnachbehandlungsvorrichtung der Vergiftung unterliegt, wenigstens teilweise anhand eines Vergleichs zwischen der Änderungsrate (P2) der Sauerstoffspeicherfähigkeit und einem vorgegebenen Schwellenwert (P2p) ausgelegt ist.

17. Motorsystem nach Anspruch 16, wobei die Motorsteuereinheit (9) zum Vergleichen der Ausgabe von dem auslassseitigen Sensor (12) mit einer theoretischen Ausgabe des auslassseitigen Sensors ausgelegt ist.

18. Motorsystem nach Anspruch 17, wobei die Motorsteuereinheit (9) zum Vergleichen der Ausgabe von dem auslassseitigen Sensor (12) mit der theoretischen Ausgabe des auslassseitigen Sensors wenigstens teilweise anhand eines Referenzwerts ($\lambda$Dp) einer Abgaseigenschaft ausgelegt ist.

19. Motorsystem nach einem der Ansprüche 17-18, wobei die Motorsteuereinheit (9) zum Bestimmen eines Pegels (CA) der Ausgabe von dem auslassseitigen Sensor (12) bei einem Referenzwert ($\lambda$Dp) einer Abgaseigenschaft, zum Bestimmen eines Pegels (CT) der theoretischen Ausgabe des auslassseitigen Gassensors bei dem Referenzwert ($\lambda$Dp) der Abgaseigenschaft und zum Vergleichen des Pegels (CA) der Ausgabe von dem auslassseitigen Sensor (12) und des Pegels (CT) der theoretischen Ausgabe des auslassseitigen Gassensors ausgelegt ist.

20. Motorsystem nach Anspruch 19, wobei der auslassseitige Gassensor (12) ein Sauerstoffsensor ist und die Abgaseigenschaft der Sauerstoffgehalt des Abgases ist.

21. Motorsystem nach Anspruch 20, wobei der auslassseitige Gassensor (12) ein schmalbandiger Sauerstoffsensor ist und der Referenzwert ($\lambda$Dp) der Abgaseigenschaft einem fetten Luft/Kraftstoff-Verhältnis entspricht.

22. Motorsystem nach einem der Ansprüche 19-21, wobei die Motorsteuereinheit (9) zum Bestimmen einer Abweichung (CT - CA) des Pegels (CA) der Ausgabe von dem auslassseitigen Sensor (12) von dem Pegel (CT) der theoretischen Ausgabe des auslassseitigen Gassensors und zum Vergleichen der Abweichung (CT - CA) mit einem vorgegebenen Schwellenwert (eCp) ausgelegt ist.

23. Motorsystem nach einem der Ansprüche 16-22, wobei die Motorsteuereinheit (9) zum Steuern eines Luft/Kraftstoff-Verhältnisses eines in wenigstens einem der Zylinder bereitgestellten Luft/Kraftstoff-Gemischs in der Weise, dass es periodisch fett wird, durch Steuerung von Luftstromsteuermitteln (10) und/oder von Kraftstoffeinspritzmitteln (11) des Motors ausgelegt ist.

24. Motorsystem nach Anspruch 23, wobei die Motorsteuereinheit (9) zum Steuern des Luft/Kraftstoff-Verhältnisses in der Weise, dass es um einen stöchiometrischen Wert schwingt, ausgelegt ist.

25. Motorsystem nach Anspruch 24, wobei die Motorsteuereinheit (9) zum Steuern des Luft/Kraftstoff-Verhältnisses in der Weise, dass es zwischen zwei Extremwerten (λDl, λDh) schwingt, ausgelegt ist.

26. Motorsystem nach einem der Ansprüche 16-25, wobei die Motorsteuereinheit (9) zum Schätzen eines Kraftstoffschwefelpegels wenigstens teilweise anhand der Analyse ausgelegt ist.

27. Motorsystem nach Anspruch 26, wobei die Motorsteuereinheit (9) beim Analysieren der Ausgabe von dem auslassseitigen Gassensor (12) zum Vergleichen der Ausgabe von dem auslassseitigen Sensor (12) mit einer theoretischen Ausgabe des auslassseitigen Sensors, die wenigstens teilweise auf einem gespeicherten Kraftstoffschwefelpegelwert beruht, und beim Schätzen eines Kraftstoffschwefelpegels zum Einstellen des gespeicherten Kraftstoffschwefelpegelwerts ausgelegt ist.

28. Motorsystem nach Anspruch 27, wobei die Motorsteuereinheit (9) zum Bestimmen einer Ausgabeabweichung (CT - CA) der Ausgabe von dem auslassseitigen Sensor (12) von der theoretischen Ausgabe des auslassseitigen Sensors, zum Bestimmen einer Änderungsrate (ΔC/ΔM) der Ausgabeabweichung (CT - CA) und zum Einstellen des gespeicherten Kraftstoffschwefelpegelwerts wenigstens teilweise anhand der Änderungsrate (ΔC/ΔM) der Ausgabeabweichung (CT - CA) ausgelegt ist.

29. Motorsystem nach einem der Ansprüche 16-28, wobei die Abgasnachbehandlungsvorrichtung eine erste Abgasnachbehandlungsvorrichtung ist und das Motorsystem eine zweite Abgasnachbehandlungsvorrichtung (82) umfasst, die sich auslassseitig der ersten Abgasnachbehandlungsvorrichtung (8) befindet.

30. Motorsystem nach Anspruch 29, wobei sich die zweite Abgasnachbehandlungsvorrichtung (82) auslassseitig des auslassseitigen Gassensors (12) befindet.

**Revendications**

1. Procédé pour un dispositif de traitement des gaz d'échappement (8), dans un système de moteur (1), comprenant un moteur à combustion interne, avec au moins un cylindre (2), et un capteur à gaz aval (12), installé en aval, ou au moins partiellement à l'intérieur, du dispositif de traitement des gaz d'échappement (8), le procédé comprenant l'analyse d'un signal de sortie provenant du capteur à gaz aval (12), et la détermination, au moins partiellement d'après ladite analyse, si le dispositif de traitement des gaz d'échappement (8) est l'objet d'empoisonnement, **caractérisé en ce qu'**il comprend en outre la détermination, au moins partiellement d'après le signal de sortie du capteur à gaz aval (12), d'une valeur d'un paramètre de diagnostic (P2) correspondant ou lié à la capacité de stockage d'oxygène du dispositif de traitement des gaz d'échappement (8), dans lequel la détermination du fait que le dispositif de traitement des gaz d'échappement est l'objet d'empoisonnement, est effectuée en partie d'après le paramètre de diagnostic (P2), le paramètre de diagnostic (P2) correspondant à un taux de changement (P2) de la capacité de stockage d'oxygène du dispositif de traitement des gaz d'échappement (8), et la détermination du fait que le dispositif de traitement des gaz d'échappement est l'objet d'empoisonnement, étant effectuée en partie d'après une comparaison entre ledit taux de changement (P2) de la capacité de stockage d'oxygène et une valeur seuil (P2p) prédéterminée.

2. Procédé selon l'une quelconque des revendications précédentes, dans lequel l'étape d'analyse d'un signal de sortie provenant du capteur à gaz aval (12) comprend la comparaison du signal de sortie provenant du capteur aval (12) et un signal de sortie de capteur aval théorique.

3. Procédé selon la revendication 2, dans lequel le signal de sortie provenant du capteur aval (12) et le signal de sortie de capteur aval théorique sont comparés d'après au moins partiellement une valeur de référence (λDp) d'une propriété des gaz d'échappement.

4. Procédé selon l'une quelconque des revendications 2 à 3, comprenant la détermination d'un niveau (CA) du signal de sortie provenant du capteur aval (12) à une valeur de référence (λDp) d'une propriété des gaz d'échappement, la détermination d'un niveau (CT) du signal de sortie de capteur à gaz aval théorique à la valeur de référence (λDp) de la propriété des gaz d'échappement, et la comparaison du niveau (CA) du signal de sortie provenant du capteur aval (12) et du niveau (CT) du signal de sortie de capteur à gaz aval théorique.

5. Procédé selon la revendication 4, dans lequel le capteur à gaz aval (12) est un capteur à oxygène, et la propriété des gaz d'échappement est la teneur en oxygène des gaz d'échappement.

6. Procédé selon la revendication 5, dans lequel le capteur à gaz aval (12) est un capteur à oxygène à bande étroite, et la valeur de référence (λDp) de la propriété des gaz d'échappement correspond à un rapport air/carburant riche.

7. Procédé selon l'une quelconque des revendications 4 à 6, comprenant la détermination d'un écart (CT-CA) entre le niveau (CA) du signal de sortie du capteur aval (12) et le niveau (CT) du signal de sortie du capteur à gaz aval théorique, et la comparaison de l'écart (CT-CA) à une valeur seuil (eCp) prédéterminée.

8. Procédé selon l'une quelconque des revendications précédentes, comprenant la commande d'un rapport air/carburant d'un mélange air/carburant fourni dans au moins l'un des cylindres, de manière qu'il devienne périodiquement riche.

9. Procédé selon la revendication 8, comprenant la commande du rapport air/carburant, de manière qu'il oscille autour d'une valeur stoechiométrique.

10. Procédé selon la revendication 9, la commande du rapport air/carburant, de manière qu'il oscille entre deux valeurs extrêmes (λDl, λDh).

11. Procédé selon l'une quelconque des revendications précédentes, comprenant l'estimation, au moins partiellement d'après ladite analyse, d'un niveau de soufre du carburant.

12. Procédé selon la revendication 11, dans lequel l'étape d'analyse d'un signal de sortie provenant du capteur à gaz aval (12) comprend la comparaison du signal de sortie provenant du capteur aval (12) à un signal de sortie de capteur aval théorique basé au moins partiellement sur une valeur de soufre dans le carburant stockée en mémoire, et l'étape d'estimation d'un niveau de soufre dans le carburant comprend l'ajustement de la valeur de niveau de soufre dans le carburant stockée en mémoire.

13. Procédé selon la revendication 12, comprenant la détermination d'un écart (CT-CA) du signal de sortie provenant du capteur aval (12) par rapport au signal de sortie de capteur aval théorique, et la détermination d'un taux de changement (ΔC/ΔM) de l'écart de signal de sortie (CT-CA), l'étape d'ajustement de la valeur de niveau de soufre dans le carburant stockée en mémoire étant basée au moins partiellement sur le taux de changement (ΔC/ΔM) de l'écart de signal de sortie (CT-CA).

14. Procédé selon l'une quelconque des revendications précédentes, dans lequel le dispositif de traitement des gaz d'échappement est un premier dispositif de traitement des gaz d'échappement, et le système de moteur comprend un deuxième dispositif de traitement des gaz d'échappement (82) installé en aval du premier dispositif de traitement des gaz d'échappement (8).

15. Procédé selon la revendication 14, dans lequel le deuxième dispositif de traitement des gaz d'échappement (82) est disposé en aval du capteur à gaz aval (12), installé en aval.

16. Système de moteur comprenant un moteur à combustion interne, comprenant au moins un cylindre (2), un dispositif de traitement des gaz d'échappement (8), un capteur à gaz aval (12), installé en aval, ou au moins partiellement à l'intérieur du dispositif de traitement des gaz d'échappement (8), et une unité de commande de moteur (9), l'unité de commande de moteur (9) étant adaptée pour analyser un signal de sortie provenant du capteur à gaz aval (12), et pour déterminer, au moins partiellement d'après ladite analyse, si le dispositif de traitement des gaz d'échappement (8) est l'objet d'empoisonnement, **caractérisé en ce que** l'unité de commande de moteur (9) est adaptée pour déterminer, au moins partiellement d'après le signal de sortie provenant du capteur à gaz aval (12), une valeur d'un paramètre de diagnostic (P2) correspondant ou lié à la capacité de stockage d'oxygène du dispositif de traitement des gaz d'échappement (8), et pour effectuer la détermination du fait que le dispositif de traitement des gaz d'échappement est l'objet d'empoisonnement, en partie d'après le paramètre de diagnostic (P2), le paramètre de diagnostic (P2) correspondant à un taux de changement (P2) de la capacité de stockage d'oxygène du dispositif de traitement des gaz d'échappement (8), et l'unité de commande de moteur (9) étant adaptée pour effectuer la détermination du fait que le dispositif de traitement des gaz d'échappement est l'objet d'empoisonnement, en partie d'après une comparaison entre ledit taux de changement (P2) de la capacité de stockage d'oxygène et une valeur seuil (P2p) prédéterminée.

17. Système de moteur selon la revendication 16, dans lequel l'unité de commande de moteur (9) est adaptée pour comparer le signal de sortie provenant du capteur aval (12) à un signal de sortie de capteur aval théorique.

18. Système de moteur selon la revendication 17, dans lequel l'unité de commande de moteur (9) est adaptée pour comparer le signal de sortie provenant du capteur aval (12) et le signal de sortie de capteur aval théorique, d'après au moins partiellement une valeur de référence (λDp) d'une propriété des gaz d'échappement.

19. Système de moteur selon l'une quelconque des revendications 17 à 18, dans lequel l'unité de commande de moteur (9) est adaptée pour déterminer un niveau (CA) du signal de sortie provenant du capteur aval (12) à une référence (λDp) d'une propriété des gaz d'échappement, pour déterminer un niveau (CT) du signal de sortie de capteur à gaz aval théorique à la valeur de référence (λDp) de la propriété des gaz d'échappement, et pour comparer le niveau (CA) du signal de sortie provenant du capteur aval (12) et le niveau (CT) du signal de sortie de capteur à gaz aval théorique.

20. Système de moteur selon la revendication 19, dans lequel le capteur à gaz aval (12) est un capteur à oxygène, et la propriété des gaz d'échappement est la teneur en oxygène des gaz d'échappement.

21. Système de moteur selon la revendication 20, dans lequel le capteur à gaz aval (12) est un capteur à oxygène à bande étroite, et la valeur de référence (λDp) de la propriété des gaz d'échappement correspond à un rapport air/carburant riche.

22. Système de moteur selon l'une quelconque des revendications 19 à 21, dans lequel l'unité de commande de moteur (9) est adaptée pour déterminer un écart (CT-CA) entre le niveau (CA) du signal de sortie du capteur aval (12) et le niveau (CT) du signal de sortie du capteur à gaz aval théorique, et comparer l'écart (CT-CA) à une valeur seuil (eCp) prédéterminée.

23. Système de moteur selon l'une quelconque des revendications 16 à 22, dans lequel l'unité de commande de moteur (9) est adaptée pour commander, par commande des moyens de commande d'écoulement d'air (10) et/ou des moyens d'injection de carburant (11) du moteur, un rapport air/carburant d'un mélange air/carburant fourni dans au moins un des cylindres de manière qu'il devienne périodiquement riche.

24. Système de moteur selon la revendication 23, dans lequel l'unité de commande de moteur (9) est adaptée pour commander le rapport air/carburant, de manière qu'il oscille autour d'une valeur stoechiométrique.

25. Système de moteur selon la revendication 24, dans lequel l'unité de commande de moteur (9) est adaptée pour commander le rapport air/carburant, de manière qu'il oscille entre deux valeurs extrêmes (λDl, λDh).

26. Système de moteur selon l'une quelconque des revendications 16 à 25, dans lequel l'unité de commande de moteur (9) est adaptée pour estimer, au moins partiellement d'après ladite analyse, un niveau de soufre du carburant.

27. Système de moteur selon la revendication 26, dans lequel l'unité de commande de moteur (9) est adaptée pour, lors de l'analyse du signal de sortie provenant du capteur à gaz aval (12), comparer le signal de sortie provenant du capteur aval (12) à un signal de sortie de capteur aval théorique basé au moins partiellement sur une valeur de soufre dans le carburant stockée en mémoire, et pour, lors de l'estimation de la valeur de niveau de soufre dans le carburant, ajuster la valeur de niveau de soufre stockée en mémoire.

28. Système de moteur selon la revendication 27, dans lequel l'unité de commande de moteur (9) est adaptée pour déterminer un écart (CT-CA) du signal de sortie provenant du capteur aval (12) par rapport au signal de sortie de capteur aval théorique, pour déterminer un taux de changement ($\Delta C/\Delta M$) de l'écart de signal de sortie (CT-CA), et pour ajuster la valeur de niveau de soufre dans le carburant stockée en mémoire d'après au moins partiellement le taux de changement ($\Delta C/\Delta M$) de l'écart de signal de sortie (CT-CA).

29. Système de moteur selon l'une quelconque des revendications 16 à 28, dans lequel le dispositif de traitement des gaz d'échappement est un premier dispositif de traitement des gaz d'échappement, et le système de moteur comprend un deuxième dispositif de traitement des gaz d'échappement (82) installé en aval du premier dispositif de traitement des gaz d'échappement (8).

30. Système de moteur selon la revendication 29, dans lequel le deuxième dispositif de traitement des gaz d'échappement (82) est installé en aval du capteur à gaz aval (12).

Fig. 1

Fig. 2

Fig. 3

Determine air mass flow,
oxygen content of exhaust gases
upstream of catalyst, and
exhaust temperature
101

Determine a value of
diagnosis parameter P2,
corresponding to the
oxygen storage capacity
108

Determine theoretical values
of the oxygen content and
exhaust temperature downstream
of the catalytic converter
102

Deterioration rate of oxygen
storage capacity larger than
predetermined deterioration rate?
109

Yes | No

No sulfur
poisoning
110

Sulfur
poisoning
112

Determine theoretical
binary sensor output
103

Deviation of actual
output from theoretical
output larger than
threshold value?
104

Fuel sulfur
level estimation
114

Regeneration
action
113

No | Yes

No sulfur
poisoning
105

Output deviation
above threshold
107

Determine rate of
change of sensor
output deviation
115

Fig. 4

EP 2 224 116 B1

Fig. 5

Fig. 6

EP 2 224 116 B1

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6901749 B
- US 6161377 A
- US 5657625 A
- EP 1324037 A1
- DE 10023793 A1
- EP 0971101 A2
- EP 1174611 A